Europäisches Patentamt

(19) European Patent Office

Office européen des brevets

(11) Publication number: **0 455 461 A1**

(12) **EUROPEAN PATENT APPLICATION**

(21) Application number: **91303893.1**

(22) Date of filing: **30.04.91**

(51) Int. Cl.⁵: **G01J 1/16**

(30) Priority: **01.05.90 GB 9009751**

(43) Date of publication of application:
**06.11.91 Bulletin 91/45**

(84) Designated Contracting States:
**ES FR IT**

(71) Applicant: **PIRELLI GENERAL plc**
**40 Chancery Lane**
**London WC2A 1JH (GB)**

(72) Inventor: **Scrivener, Paul Laurence**
**Via San Pietro 70/72**
**I-20020 Solaro (MI) (IT)**
Inventor: **Appleyard, Andrew Paul**
**Via Arrigo Boito 12**
**I-20052 Monza (MI) (IT)**

(74) Representative: **Abbie, Andrew Kenneth et al**
**R.G.C. Jenkins & Co. 26 Caxton Street**
**London SW1H 0RJ (GB)**

(54) **Light measuring apparatus and method.**

(57) A single light source (10) provides broadband light for an intensity-based sensing element (12). Broadband light reflected from the sensing element is split and passes through two narrowband filters (16, 17) having passbands which cover different wavelength ranges. The two narrowband optical signals are detected by two detectors (20, 21) which generate two signals (A, B). A processing unit (22) divides the two signals to give a ratiometric determination of the measurand, thereby largely compensating for extraneous variations in the signals.

EP 0 455 461 A1

FIG.1.

This invention relates to measuring apparatus and a method of measurement in an intensity-based optical sensing system.

In a single channel intensity-based optical sensing system, the measurand is determined from a change in the intensity of a signal used to interrogate a sensor. The problem is that any change in the interrogating signal intensity, whether related to the measurand or not, is interpreted by the system as a change in the measurand. Thus, inaccuracies occur in determining the measurand as a result of extraneous changes in the signal intensity, for example, from temperature variations of system components or changes in attenuation of the sensing element downlead due to bending.

The present invention provides a method of measurement in an intensity based optical sensing system, comprising the steps of connecting an input of a sensing element to a single source of broadband light, connecting an output of the sensing element to two narrowband optical filters having passbands covering different wavelength ranges, and processing the two signals received from the sensing element via the two filters to produce a ratioed determination of the measurand, and further comprising the step of selecting the filters to have their respective passbands on the same side of the peak of the emission intensity spectrum of the source as each other.

The invention also provides measuring apparatus comprising an intensity-based optical sensing element, first optical transmission means for connecting an input of the sensing element to a single source of broadband light, second optical transmission means for connecting an output of the sensing element to two narrowband optical filters having passbands covering different wavelength ranges, and processing means for producing a ratioed determination of the measurand from the two signals received from the sensing element via the two filters, wherein the filters are selected to have their respective passbands on the same side of the peak of the emission intensity spectrum of the source as each other.

In the preferred embodiment, the invention has the advantage of reducing the system complexity, subsystem duplication and high degree of control necessary with conventional two signal source systems in order to achieve the required stability of emission intensity and wavelength. Compensation for long term instability due to drift in emission wavelength is achieved by appropriate choice of filter passband wavelength with respect to the spectral output of the broadband source.

By way of example, embodiments of the invention will now be described with reference to the accompanying drawings, in which:

Figure 1 illustrates measuring apparatus in accordance with the invention;

Figure 2 is a plot of the signals from the apparatus; and

Figure 3, 4 and 5 are plots illustrating the improvement of the method according to the invention compared with conventional methods.

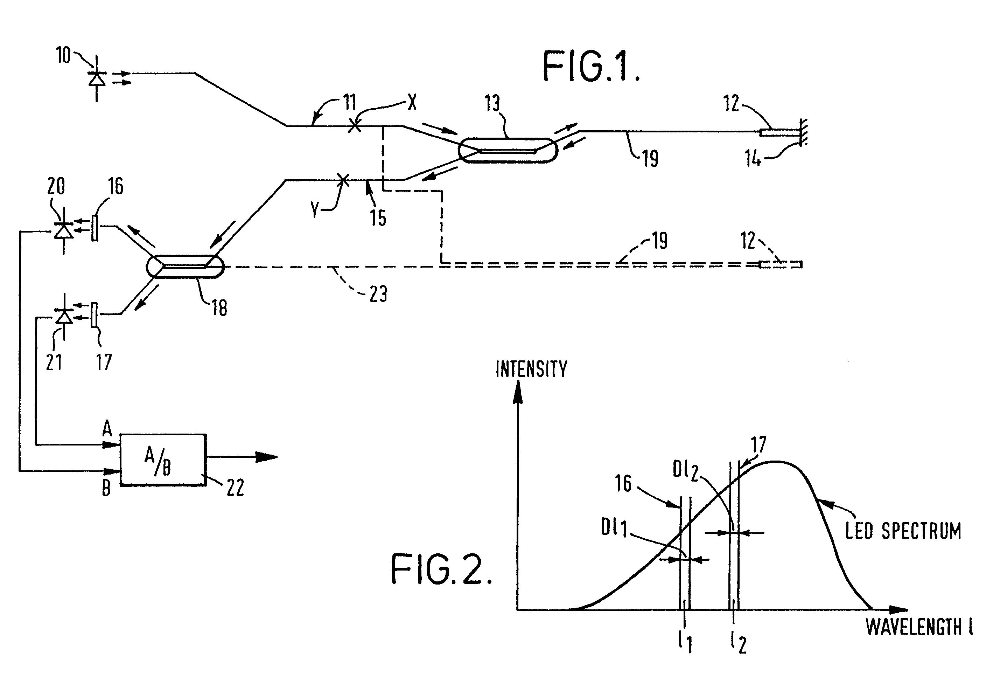

The preferred embodiment of measuring apparatus is seen in Figure 1. 10 represents a light source, which here is provided by a single broadband LED. Broadband light from the source 10 is guided by optical transmission means, which here comprises an optical fibre 11, to a sensing element 12 via a three port fibre directional splitter 13 with low back reflection. After passing through the sensing element 12, the broadband light, having been influenced by the measurand, is reflected by a mirror 14 and passes back through the sensing element. The reflected broadband light is then guided by optical transmission means, which here comprises an optical fibre 15, to two narrowband filters 16 and 17 via splitter 13 and a modal insensitive coupler 18.

Here, it will be seen that a single optical fibre 19 leads between the sensing element 12 and splitter 13 and is therefore common to both transmission paths 11 and 15. In an alternative arrangement, which may be termed a "straight through" system, mirror 14 is absent and instead, a further optical fibre (shown as dotted line 23 in Figure 1) separate from optical fibre 19 leads from the output of the sensing element 12 to coupler 18.

The two filters 16, 17 have passbands which cover different wavelength ranges. The two filters 16, 17 are chosen to let through light of differing centre wavelengths (CWL) and these will have been influenced to different degrees by the measurand. This is seen in Figure 2 where $l_1$ and $l_2$ are the centre wavelengths of the two filters 16, 17 and $Dl_1$ and $Dl_2$ their respective passbands (full width half maximum). The two narrowband optical signals filtered out from the broadband optical signal are detected by detectors 20 and 21, which here are photodiode detectors. These generate signals A and B. Signals A and B are passed to a processing unit 22 which divides them and hence gives a ratiomeric determination. The system thus uses the ratio of intensity of two interrogating signals, separated in wavelength so as to have different measurand related responses through the wavelength dependent response of the sensing element, to give information about the measurand. The advantage of this system is that any signal intensity variations which are unrelated to the measurand, but common to both signals, are effectively eliminated in the ratioing procedure. The system is therefore able to compensate, for example, for the induced loss when the optical fibre downlead 19 is bent and for source intensity fluctuations. The induced bend loss or source intensity fluctuations affects both signals equally (within wide limits) and is thus cancelled in the ratioing procedure.

Conventionally, two light signals produced for example by semiconductor lasers, LED's, filtered white light sources etc are used, and travel concurrently to and from a sensing element. It is then necessary that the two sources are individually controlled to a high degree to maintain a fixed system coupled intensity and emission wavelength to ensure sensing accuracy and repeatability. Each signal intensity has to be monitored and any change in intensity compensated for, usually by control of the drive current to the emitter.

Positioning of the CWL's $l_1$ and $l_2$ of the two filters 16, 17, on the same side of the peak of the emission intensity spectrum as each other, as in the example of Figure 2, greatly reduces the output intensity and emission wavelength stability requirement of the single light source. The only significant source stabilization requirement is to temperature stabilize the LED, preferably to better than ± 2°C. Preferably there is no overlap in the wavelength ranges of the passbands of the two chosen filters. Preferably also, the wavelength ranges of the passbands of the two chosen filters are closely adjacent each other and in a middle region of either the upwardly or downwardly sloping sections of the emission intensity spectrum to make maximum allowance for possible shifts in the spectrum.

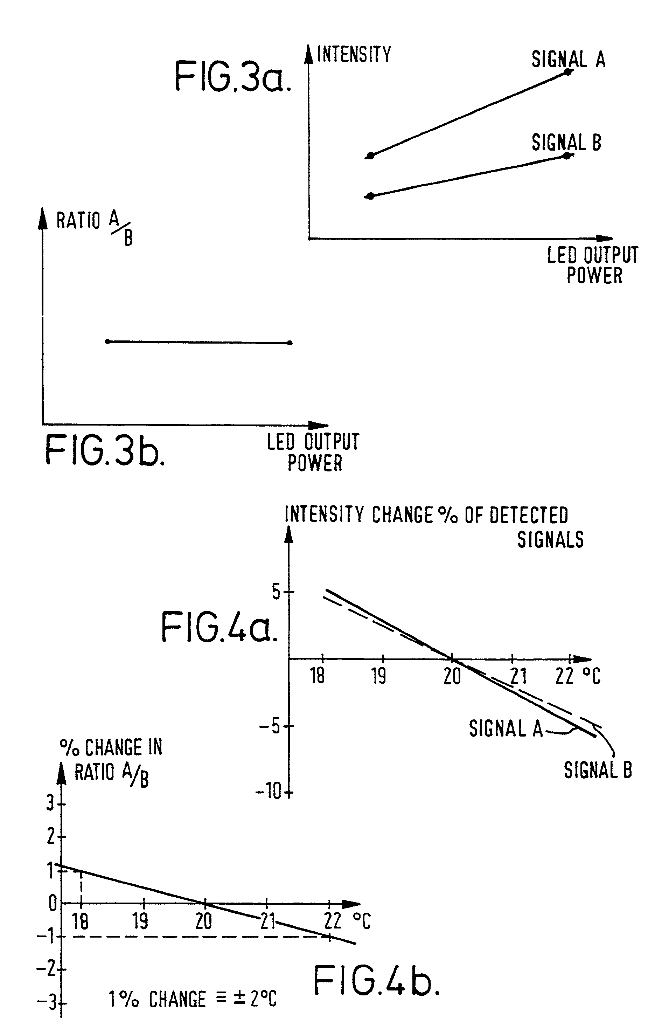

Figure 3a shows the changes in signals A and B as a function of LED output intensity and it will be seen that both signals increase or decrease by the same factor. Applying the ratiometric procedure, therefore, as seen in Figure 3b, compensates for this variation without need of source output intensity stabilization.

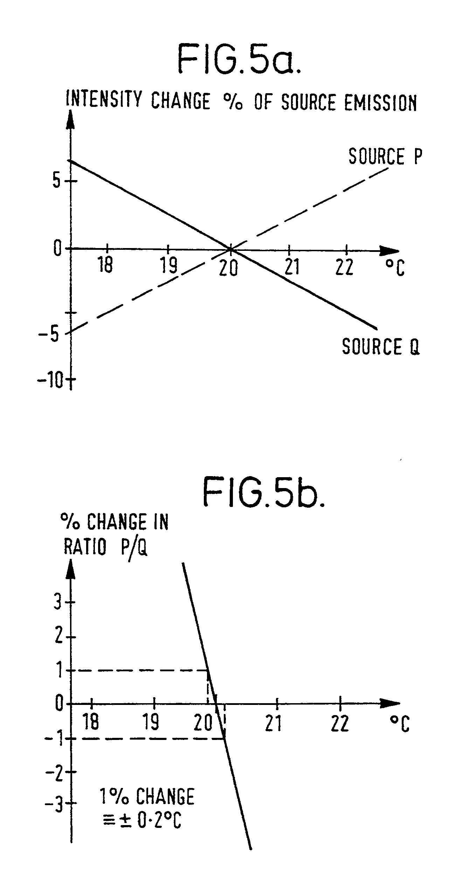

Figure 4a shows the effect of a shift in LED output spectrum due to a change in temperature of the LED on the two signals A and B. Here two signals do not vary by the same factor. However, if the LED is temperature stabilised to better than ± 2°C, the error introduced in the ratio is less than 1%, as can be seen from Figure 4b. This can be compared with a conventional two source system where one source P may increase in temperature whilst the other Q decreases. This is seen in Figure 5a. In this case, to achieve the same 1% accuracy, the two sources would have to be temperature stabilized to ± 0.2°C, as is evident from Figure 5b.

The apparatus is able to compensate for aging of the source because, as the source ages and the wavelength emission spectrum shifts, the two signals A and B will change correspondingly and the ratioing procedure is thus able to eliminate the effect to a large degree. In the conventional two-source system, in contrast, aging of the sources may occur at different rates and thus no compensation is afforded.

Though the two filters 16, 17 are also temperature dependent, this is to a much lesser degree than a light source. If the filters are temperature stabilized to the same degree as the LED source, no additional drifts or inaccuracies are introduced.

A further problem associated with optical fibres comes from reflections from connectors (or indeed other sources or glass/air interfaces or refractive index mismatches). In the preferred apparatus, therefore, there is no connector in the optical fibre between the splitter 13 and the sensing element 12. If there were, this would cause a small percentage of light (perhaps 4%) to be reflected directly back to the detectors 20, 21 without having passed through the sensing element and this would introduce error with the ratioed output. In the preferred apparatus, therefore, connectors are used only on the source side of splitter 13, such connectors being indicated by X and Y in Figure 1.

## Claims

1. A method of measurement in an intensity based optical sensing system, comprising the steps of connecting an input of a sensing element to a single source of broadband light, connecting an output of the sensing element to two narrowband optical filters having passbands covering different wavelength ranges, and processing the two signals received from the sensing element via the two filters to produce a ratioed determination of the measurand, and further comprising the step of selecting the filters to have their respective passbands on the same side of the peak of the emission intensity spectrum of the source as each other.

2. A method as claimed in claim 1 and further including selecting the filters to have no overlap in the wavelength ranges of their respective passbands.

3. A method as claimed in claim 1 or claim 2 and further including selecting the filters to have the wavelength ranges of their respective passbands closely adjacent each other and in a middle region of either the upwardly or downwardly sloping sections of the spectrum.

4. A method as claimed in any preceding claim wherein the connection of the input and output of the sensing element is by a single optical fibre.

5. A method as claimed in any one of claims 1 to 3 wherein the connection of the input and output of the sensing element is by separate optical fibres.

6. A method as claimed in claim 4 and comprising the step of connecting the single optical fibre leading from the sensing element to a two way splitter with one way leading to the source and the other way leading to the two filters, and avoiding a connection or other refractive index mismatch in the said single optical fibre between the splitter and the sensing element.

7. Measuring apparatus comprising an intensity-based optical sensing element, first optical transmission means for connecting an input of the sensing element to a single source of broadband light, second optical transmission means for connecting an output of the sensing element to two narrowband optical filters having passbands covering different wavelength ranges, and processing means for producing a ratioed determination of the measurand from the two signals received from the sensing element via the two filters, wherein the filters are selected to have their respective passbands on the same side of the peak of the emission intensity spectrum of the source as each other.

8. Apparatus as claimed in claim 7 wherein the connection of the input and output of the sensing element comprises a single optical fibre which is common to both first and second transmission means.

9. Apparatus as claimed in claim 8 wherein said common single optical fibre leads from the sensing element to a two way splitter and there is no connection or other refractive index mismatch in the optical fibre between the splitter and the sensing element.

10. Apparatus as claimed in claim 7 wherein the first and second transmission means comprise separate optical fibres.

# FIG.1.

EP 0 455 461 A1

# FIG.2.

FIG.3a.

INTENSITY

SIGNAL A

SIGNAL B

LED OUTPUT
POWER

RATIO A/B

FIG.3b.

LED OUTPUT
POWER

INTENSITY CHANGE % OF DETECTED
SIGNALS

FIG.4a.

5

18   19   20   21   22 °C

-5

SIGNAL A

SIGNAL B

-10

% CHANGE IN
RATIO A/B

3

2

1

0

-1

-2

-3

18   19   20   21   22 °C

1% CHANGE ≡ ± 2°C

FIG.4b.

# FIG.5a.

INTENSITY CHANGE % OF SOURCE EMISSION

SOURCE P

SOURCE Q

# FIG.5b.

% CHANGE IN
RATIO P/Q

1% CHANGE
≡ ± 0·2°C

European Patent Office

**EUROPEAN SEARCH REPORT**

Application Number

| DOCUMENTS CONSIDERED TO BE RELEVANT | | | EP 91303893.1 |
|---|---|---|---|
| Category | Citation of document with indication, where appropriate, of relevant passages | Relevant to claim | CLASSIFICATION OF THE APPLICATION (Int. Cl.5) |
| A | <u>GB - A - 1 461 387</u><br>(ILFORD)<br>    * Page 1, line 84 - page 2,<br>    line 77; fig. 1,2 *<br>    -- | 1,2,7 | G 01 J 1/16 |
| A | <u>GB - A - 2 105 460</u><br>(RACAL)<br>    * Page 1, line 68 - page 2,<br>    line 87; fig. 1 *<br>    ---- | 1,7 | |
| | | | TECHNICAL FIELDS SEARCHED (Int. Cl.5)<br><br>G 01 J 1/00 |

The present search report has been drawn up for all claims

| Place of search | Date of completion of the search | Examiner |
|---|---|---|
| VIENNA | 27-06-1991 | BAUER |

EPO FORM 1503 03.82 (P0401)